# EUROPÄISCHE PATENTANMELDUNG

(11) **EP 4 843 373 A1**
(43) Veröffentlichungstag der Anmeldung: **25.11.2026**
(21) Anmeldenummer: 26164617.8
(22) Anmeldetag: 13.03.2026
(51) Int. Cl.: A01C 7/20, A01B 61/04, A01C 5/06

(54) **LANDWIRTSCHAFTLICHE BODENBEARBEITUNGSVORRICHTUNG**

(30) Priorität: 21.05.2025 DE 102025119815
(71) Anmelder: PÖTTINGER Landtechnik GmbH, 4710 Grieskirchen (AT)
(72) Erfinder: GRÜNDLING, Franz, 4710 Grieskirchen (AT); STADLBAUER, Franz, 4710 Grieskirchen (AT); KIRCHMAYR, Alois, 4710 Grieskirchen (AT); KRAUS, Hans-Georg, 4710 Grieskirchen (AT)
(74) Vertreter: Lorenz Seidler Gossel Part. mbB

(57) **Zusammenfassung**

Die vorliegende Erfindung betrifft landwirtschaftliche Bodenbearbeitungsvorrichtungen wie Sämaschinen (1) und deren Säschar-Aufhängung. Insbesondere betrifft die vorliegende Erfindung eine landwirtschaftliche Bodenbearbeitungsvorrichtung mit zumindest einem Säschar (2) zum Ausbilden einer Bodenfurche, in der Saatgut und/oder Dünger ablegbar ist, einer höhenbeweglichen Lenkeraufhängung (3) zum höhenbeweglichen Aufhängen des Säschars (2), sowie zumindest einer dem Säschar (2) nachlaufenden Tiefenführungsrolle (4) zur Arbeitstiefenführung des Säschars (2), wobei die Lenkeraufhängung (3) zwei Lenker (5, 6) aufweist, die voneinander beabstandete, gelenkige Anlenkpunkte (7, 9) an einem das Säschar (2) tragenden Scharträger (11) besitzen, wobei ein erster der beiden Lenker (5) schwenkbar um eine liegende, sich quer zur Fahrtrichtung (12) erstreckende Aufhängungsschwenkachse (13) aufgehängt ist und ein zweiter der beiden Lenker (6) längenveränderbar ausgebildet ist und/oder einen verschieblichen Anlenkpunkt (9, 10) besitzt. Erfindungsgemäß ist der erste Lenker (5) von einer ersten Vorspannvorrichtung (14) elastisch auf den Boden zu vorspannbar und der zweite Lenker (6) von einer zweiten Vorspannvorrichtung (15) elastisch in eine vorbestimmte Lenkerlänge und/oder in eine vorbestimmte Anlenkpunktstellung vorspannbar.

## Beschreibung

Die vorliegende Erfindung betrifft landwirtschaftliche Bodenbearbeitungsvorrichtungen wie Sämaschinen und deren Säschar-Aufhängung. Insbesondere betrifft die vorliegende Erfindung eine landwirtschaftliche Bodenbearbeitungsvorrichtung mit zumindest einem Säschar zum Ausbilden einer Bodenfurche, in der Saatgut und/oder Dünger ablegbar ist, einer höhenbeweglichen Lenkeraufhängung zum höhenbeweglichen Aufhängen des Säschars, sowie zumindest einer dem Säschar nachlaufenden Tiefenführungsrolle zur Arbeitstiefenführung des Säschars, wobei die Lenkeraufhängung zwei Lenker aufweist, die voneinander beabstandete, gelenkige Anlenkpunkte an einem das Säschar tragenden Scharträger besitzen, wobei ein erster der beiden Lenker schwenkbar um eine liegende, sich quer zur Fahrtrichtung erstreckende Aufhängungsschwenkachse aufgehängt ist und ein zweiter der beiden Lenker längenveränderbar ausgebildet ist und/oder einen verschieblichen Anlenkpunkt besitzt.

Landwirtschaftliche Ausbringgerätschaften wie Sämaschinen umfassen oft eine oder mehrere Reihen von Säscharen, die nebeneinander quer zur Fahrtrichtung aufgereiht sind, um Bodenfurchen zu ziehen, in denen Saatgut und/oder Dünger beispielsweise aus einem dem Säschar zugeordneten Särohr abgelegt wird. Als Scharwerkzeug können die Säschare dabei zinkenförmige Scharmeißel aufweisen, die an ihrer Vorderseite eine Schneidkante zum Zerschneiden bzw. Zerfurchen des Bodens besitzen, oder auch Scharscheiben umfassen, die mit ihrer Drehachse leicht schräg angestellt sein können, um in den Boden nicht nur einen Schlitz zu schneiden, sondern eine Furche zu ziehen.

Den Säscharen sind dabei üblicherweise Tiefenführungsrollen zugeordnet, um die Arbeitstiefe der Säschare zu steuern, wobei mittels der Tiefenführungsrollen auch die von den Säscharen geformten Bodenfurchen wieder geschlossen werden können. Die Tiefenführungsrollen sind dabei regelmäßig nachlaufend zu den Säscharen angeordnet, um das Saatgut bzw. den Dünger in die Bodenfurchen ablegen zu können, bevor die Tiefenführungsrollen die Furchen wieder schließen.

Um eine Bodenanpassung zu erreichen, sind die Säschare dabei üblicherweise mittels einer Lenkeraufhängung höhenbeweglich am Maschinenrahmen bzw. einem damit verbundenen Träger gelagert, wobei die Säschare einzeln oder auch paarweise bzw. gruppenweise zusammengefasst aufgehängt sein können, um einzeln oder paar- bzw. gruppenweise unabhängig von den restlichen Säscharen einer Reihe Auf- und Abbewegungen ausführen zu können, um auf reliefartige Bodenkonturen wie Querwellen, Längswellen oder Kuppen reagieren oder auch bei Auffahren auf Hindernisse wie Steine ausweichen zu können.

Bei Scharscheiben ist beim Auffahren auf Steine oder andere Hindernisse, wie große Wurzeln, eine Ausweichbewegung nach oben relativ unkritisch bzw. einfach zu erreichen, da die Scharscheiben mit ihrem Umfang auf das Hindernis auflaufen und nach oben gedrückt werden.

Bei Scharmeißeln hingegen ist beim Anfahren an Steine oder andere Hindernisse ein Ausweichen nach oben nicht so einfach zu erreichen, da die Schneidkante an der Vorderseite der Scharmeißel sich üblicherweise aufrecht erstreckt und oft sogar unter einem positiven Anstellwinkel leicht schräg zur Vertikalen nach vorne geneigt ist, das heißt, die Schneidkante erstreckt sich von oben nach unten betrachtet in Fahrtrichtung leicht schräg nach vorne, um ein aggressiveres Schneidverhalten zu erreichen, bei dem sich der Scharmeißel aufgrund des positiven Anstellwinkels sozusagen von selbst in den Boden zieht bzw. gräbt. Allerdings führt dies dazu, dass beim Auffahren auf Steine oder andere Hindernisse keine Ausweichbewegung nach oben erzeugt wird, sondern der Scharmeißel verstärkt an Hindernissen hängen bleibt.

Eine gewisse Abhilfe kann hierbei eine Einarm-Aufhängung erreichen, bei der die Säschar an einem Tragarm befestigt ist, der mit seinem vorderen Ende an einem liegenden Querträger aufgehängt ist und sich von dort schräg nach hinten unten zur Säschar erstreckt. Fährt die Säschar gegen ein Hindernis, kann der Tragarm nach oben und aufgrund seiner Schrägstellung mit seinem unteren, das Säschar tragenden Endabschnitt auch ein Stück weit nach hinten wegschwenken, um dem Hindernis auszuweichen. Dabei kann auch das Scharwerkzeug, wie beispielsweise der Scharmeißel, ein Stück weit nach hinten verschwenken, was die genannte Problematik des Verfangens an Hindernissen abmildert. Die Tragarme solcher Einarm-Aufhängungen sind dabei oft mit Quetschelementen in Form von Gummischnüren am Tragarm eingespannt, die sich beim Verschwenken des Tragarms aus der Ausgangs- bzw. Neutralstellung heraus zunehmend verformen bzw. eine Quetschung erfahren und hierdurch eine Rückstellkraft erzeugen. Diese elastische Einspannung ermöglicht gleichzeitig auch eine Bodenanpassung.

Allerdings sind die genannten Einarm-Aufhängungen gerade bei Scharmeißeln auch nachteilig, da sich auch im normalen Arbeitsbetrieb ohne Anfahren an Hindernisse bei Höhenbewegungen zur Bodenanpassung, wie beispielsweise beim Überfahren von Bodenwellen, der Anstellwinkel des Scharmeißels ändert. Zum anderen ist es auch schwierig, bei Verstellung der Arbeitstiefe beispielsweise durch Verstellen der Tiefenführungsrollen relativ zum Scharträger die Bodenanpresskraft passend einzustellen, insbesondere wenn die genannte Gummischnur- bzw. Quetschelemente-Einspannung der Tragarme verwendet wird.

Um Höhenbewegungen ohne Veränderungen des Anstellwinkels zu ermöglichen und auch die Einstellung der Arbeitstiefe zu erleichtern, wurden bereits Mehrlenker-Aufhängungen vorgeschlagen, die nach Art eines Viergelenks arbeiten und zumindest näherungsweise als Parallelogramm ausgebildet sein können. Der Säscharträger, an dem die Säschar befestigt ist, wird dabei mit zwei Anlenkpunkten einerseits an einem Oberlenker und andererseits an einem Unterlenker gelenkig befestigt, wobei die Unterlenker wiederum schwenkbar am Maschinenrahmen bzw. einem oder mehreren Trägern angelenkt werden, so dass die Lenker und damit die Säschar auf- und abschwingen können. Das Säschar kann durch die Mehrlenkeraufhängung bei Auf- und Abbewegungen zumindest näherungsweise parallel geführt werden, was bei normalen Bodenanpassbewegungen ungewollte Veränderungen des Anstellwinkels vermeidet, andererseits aber beim Anfahren an Hindernisse wegklappende Ausweichbewegungen erschwert.

Eine Mehrlenkeraufhängung für einen Scharmeißel mit Ober- und Unterlenkern zeigt beispielsweise die Schrift US 7,159,523 B2, bei der der obere der beiden Lenker als Hydraulikzylinder ausgebildet ist, der die Säschar auf den Boden drückt. Genauer gesagt ist am Säscharträger, an dem der Scharmeißel befestigt ist, auch eine Tiefenführungsrolle angelenkt, so dass der den Oberlenker bildende Hydraulikzylinder die Tiefenführungsrolle auf den Boden und den Scharmeißel in den Boden drückt. Der Hydraulikdruck für den genannten Hydraulikzylinder muss dabei so eingestellt werden, dass der Hydraulikzylinder auch bei normalem Arbeitsbetrieb nachgeben kann, um Höhenbewegungen zur Bodenanpassung, beispielsweise beim Überfahren von Bodenwellen, zuzulassen. Insgesamt ergibt sich hierdurch eine instabile Kinematik hinsichtlich des Anstellwinkels des Scharmeißels, da zusätzlich zu Höhenschwenkbewegungen der Ober- und Unterlenker gleichzeitig auch noch Schwenkbewegungen des Scharträgers durch Nachgeben des Hydraulikzylinders zugelassen werden.

Der vorliegenden Erfindung liegt hiervon ausgehend die Aufgabe zugrunde, eine verbesserte landwirtschaftliche Bodenbearbeitungsvorrichtung der eingangs genannten Art zu schaffen, die Nachteile des Standes der Technik vermeidet und letzteren in vorteilhafterweise weiterbildet. Insbesondere soll eine verbesserte Aufhängung der Säschar erreicht werden, die die Vorteile von Einarm- und Mehrarmaufhängungen gleichermaßen erreicht, ohne deren Nachteile zu übernehmen. Vorzugsweise soll eine präzise Führung der Säschar bei Höhenbewegungen zur Bodenanpassung erreicht werden, ohne dies durch verschärfte Probleme beim Anfahren an Hindernissen zu erkaufen.

Erfindungsgemäß wird die genannte Aufgabe durch eine landwirtschaftliche Bodenbearbeitungsvorrichtung gemäß Anspruch 1 gelöst. Bevorzugte Ausgestaltungen der Erfindung sind Gegenstand der abhängigen Ansprüche.

Es wird also vorgeschlagen, den beiden Lenkern der Lenkeraufhängung separate Vorspannvorrichtungen zuzuordnen, um die Beweglichkeiten bzw. Vorspannungen der beiden Lenker unterschiedlich und für verschiedene Funktionen individuell steuern zu können und eine für verschiedene Betriebssituationen jeweils präzise gesteuerte Kinematik zu erzielen. Erfindungsgemäß ist der erste Lenker von einer ersten Vorspannvorrichtung elastisch auf den Boden zu vorspannbar und der zweite Lenker von einer zweiten Vorspannvorrichtung elastisch in eine vorbestimmte Lenkerlänge und/oder in eine vorbestimmte Anlenkpunktstellung vorspannbar. Durch die separaten bzw. jeweils eigenen Vorspannvorrichtungen können die verschiedenen Beweglichkeiten der beiden Lenker gezielt und individuell gesteuert bzw. beeinflusst und an voneinander verschiedene Anforderungen angepasst werden. Die erste Vorspannvorrichtung steuert das Auf- und Abverschwenken der Lenkeranordnung zur Bodenanpassung und die Andruckkraft des Säschars auf den Boden, während die zweite Vorspannvorrichtung die Längung/Verkürzung bzw. bei einem verschieblichen Anlenkpunkt die Verschiebung des Anlenkpunkts des zweiten Lenkers beeinflussen und steuern kann.

Insbesondere kann die zweite Vorspannvorrichtung so ausgebildet werden, dass eine Längenveränderung bzw. Verschiebung des Anlenkpunkts des zweiten Lenkers nur in bestimmten Betriebssituationen zugelassen wird und in anderen Betriebssituationen unterbunden wird, so dass die Lenkeraufhängung in den genannten anderen Betriebssituationen wie eine "normale" Lenkeraufhängung mit zwei starren Lenkern arbeiten kann. Hierdurch kann die Lenkeraufhängung sozusagen zwischen zwei Betriebsmodi umschalten, insbesondere wie eine Viergelenksaufhängung arbeiten, wenn der zweite Lenker hinsichtlich Längung und Verschiebung seines Anlenkpunkts von der zweiten Vorspannvorrichtung noch gesperrt ist, und wie eine Einlenker-Aufhängung arbeiten, wenn die zweite Vorspannvorrichtung nachgibt.

Vorteilhafterweise bildet der zweite Lenker und die ihm zugeordnete zweite Vorspannvorrichtung einen Anfahr- bzw. Überlastschutz, der ein Ausweichen des Säschars bei Überlast bzw. Anfahren an ein Hindernis gestattet bzw. erleichtert, insbesondere durch eine Veränderung der Kinematik der Lenkeraufhängung unterstützt.

In Weiterbildung der Erfindung können die beiden Vorspannvorrichtungen unterschiedlich ausgebildet und derart aufeinander abgestimmt sein, dass einerseits in einem bestimmungsgemäßen Arbeitsbetrieb, in dem die auf das Säschar wirkendenden Bodenkräfte kleiner als ein vorbestimmter Grenzwert sind, der genannte zweite Lenker längenunveränderbar und/oder dessen verschieblicher Anlenkpunkt unverschiebbar festgehalten ist und der Scharträger unter Überwindung der Vorspannung der ersten Vorspannvorrichtung höhenbewegbar ist. Dieser bestimmungsgemäße Arbeitsbetrieb kann insbesondere bestimmungsgemäße Höhenbewegungen zur Bodenanpassung, beispielsweise beim Überfahren von Bodenwellen oder Hügeln, umfassen, solange keine Hindernisse wie Steine, dicke Wurzeln oder ähnliches auftreten. Solange das Säschar nicht gegen ein solches Hindernis fährt, sondern lediglich den Boden mit üblichen Bodenbeschaffenheiten zerfurcht, wirken keine übermäßigen Bodenkräfte auf das Säschar und die Aufhängung kann ohne Teleskopieren und ohne Verstellung des Anlenkpunkts des zweiten Lenkers nach Art eines Viergelenks mit festen Lenkern arbeiten. Selbstverständlich kann die Bodenbeschaffenheit auch hier variieren und auch kleinere Steine umfassen, die jedoch von der Säschar weggerückt werden, ohne dass die Bodenkräfte auf das Säschar einen vorbestimmten Grenzwert überschreiten würden.

Fährt andererseits das Säschar gegen einen großen Stein oder ein anderes Hindernis wie eine dicke Wurzel, so dass die auf das Säschar wirkenden Bodenkräfte größer als der genannte Grenzwert oder auch größer als ein anderer Grenzwert, der größer oder kleiner als der erstgenannte Grenzwert sein kann, werden und/oder eine andere Richtung als die Bodenkräfte bei üblicher Bearbeitung erhalten, kann bestimmungsgemäß die zweite Vorspannvorrichtung elastisch nachgeben, so dass der zweite Lenker seine Länge ändern und/oder seinen Anlenkpunkt verschieben kann.

In der Folge einer solchen Längenveränderung des zweiten Lenkers und/oder Verschiebung seines Anlenkpunktes, kann der Scharträger und damit das daran befestigte Säschar beispielsweise in Form eines Scharmeißels eine Schwenkbewegung gegenüber dem ersten Lenker ausführen, ohne dass sich der erste Lenker bewegen müsste. Insbesondere kann ein Scharmeißel in einer solchen Situation unter Überwindung der Vorspannung der zweiten Vorspannvorrichtung relativ zum ersten Lenker nach hinten wegschwenken, um einem Hindernis auszuweichen, ohne dass sich dabei der erste Lenker bewegen muss. Da beim Anfahren gegen einen Stein eine sehr große Kraftkomponente näherungsweise horizontal von vorne auf den Scharmeißel wirkt, treten vertikale Bodenkraftkomponenten in den Hintergrund, so dass sich nicht nur die betragsmäßige Größe der resultierenden Bodenkraft auf den Scharmeißel, sondern auch deren Richtung ändert. Dies kann durch geschickte Wahl der Hebelarme der verschieden gerichteten Bodenkräfte dazu genutzt werden, gezielt die zweite Vorspannvorrichtung elastisch nachgeben zu lassen, wenn das Schar auf ein Hindernis trifft.

Eine solche Ausweichbewegung des Säschars durch Verschwenken nach hinten kann insbesondere dann von Vorteil sein, wenn das Säschar in Form eines Scharmeißels ausgebildet ist, der in der noch unverkürzten/ungelängten Stellung des zweiten Lenkers mit einem positiven Schneidkantenwinkel angestellt sein kann, das heißt, sich die Schneidkante von oben nach unten schräg nach vorne erstreckt. Trotz eines solchen aggressiven, für den Normalbetrieb vorteilhaften Setups des Scharmeißels kann die sich hierdurch an sich ergebende Problematik beim Auffahren auf Hindernisse entschärft werden, da der Scharmeißel nach hinten wegschwenken kann, bis der Schneidkantenwinkel negativ wird, das heißt, sich die Schneidkante von oben nach unten schräg nach hinten erstreckt. Durch Erreichen eines solchen negativen Schneidkantenwinkels erhält der Scharmeißel nach Art eines Keils Auftrieb, das heißt, er versucht eigenständig sich aus dem Boden heraus nach oben zu bewegen, wodurch der Scharmeißel über das Hindernis leichter hinwegkommt.

In vorteilhafter Weiterbildung der Erfindung kann ein Schwenkbegrenzer die Verschwenkung des Scharträgers gegenüber dem ersten Lenker begrenzen, wobei vorzugsweise der genannte Schwenkbegrenzer derart ausgebildet bzw. positioniert sein kann, dass der zweite Lenker und die zweite Vorspannvorrichtung noch Verstellweg zur Verstellung der Lenkerlänge bzw. des verschiebbaren Anlenkpunkts in entgegengesetzte Richtungen besitzen, wenn der Schwenkbegrenzer die Verschwenkung des Scharträgers gegenüber dem ersten Lenker blockiert. Durch den noch gegebenen Verstellweg des zweiten Lenkers und der zweiten Vorspannvorrichtung kann die Lenkeraufhängung sich insgesamt noch auf und ab bewegen, auch wenn der Schwenkbegrenzer aktiv geworden ist und das Verschwenken des Scharträgers gegenüber dem ersten Lenker blockiert, das heißt, die Lenkeraufhängung bleibt weiterhin beweglich und arbeitsfähig, ohne dass der zweite Lenker dies blockieren würde.

Wenn der genannte Schwenkbegrenzer das Verschwenken des Scharträgers gegenüber dem ersten Lenker blockiert, ändert sich die Kinematik der Lenkeraufhängung, die dann nach Art einer Einarm-Aufhängung arbeiten kann. Der Scharträger wird dann nicht mehr von beiden Lenkern bei Höhenbewegungen in seiner Schwenkstellung geführt, wie dies eine Parallelogrammaufhängung tun würde, sondern es erfolgt eine Führung des Scharträgers entsprechend einer Einlenker-Aufhängung, das heißt, der Scharträger und damit das Säschar folgt den Schwenkbewegungen des ersten Lenkers und macht dessen Verschwenkungen mit, wenn sich der erste Lenker zur Bodenanpassung weiter nach oben oder nach unten bewegt. Der zweite Lenker passt sich durch Längung bzw. Verstellung seines Anlenkpunktes entsprechend an und wirkt in dieser Situation, das heißt, wenn der Schwenkbegrenzer die Verschwenkbarkeit des Scharträgers gegenüber dem ersten Lenker blockiert, als Schwenkdämpfer und/oder Federbein, welcher/s zusätzlich zu ersten Vorspannvorrichtung Auf- und Abbewegungen der Lenkeranordnung beeinflussen kann.

Der genannte Schwenkbegrenzer kann beispielsweise eine Anschlagkontur am ersten Lenker umfassen, gegen die eine Anschlagkontur am Scharträger oder auch am Anlenkpunkt des zweiten Lenkers, beispielsweise in Form eines Gelenkbolzen anfahren kann, wenn der Scharträger das Ende seines Schwenkbereichs gegenüber dem ersten Lenker erreicht hat.

Der Schwenkbegrenzer kann am ersten Lenker dabei insbesondere das nach hinten schwenken des Säschars beim Anfahren gegen ein Hindernis begrenzen, insbesondere in einer Stellung, in der das Säschar in Form eines Scharmeißels den genannten negativen Schneidkantenwinkel einnimmt.

Vorteilhafterweise kann der Schwenkbegrenzer dabei derart ausgebildet sein, dass der genannte negative Schneidkantenwinkel in der Blockierstellung ausreichend groß ist, um das Hinwegkommen über ein Hindernis zu erleichtern, andererseits aber dem zweiten Lenker und der zweiten Vorspannvorrichtung noch eine ausreichende Verstellbarkeit lässt, um Auf und Abbewegungen der Lenkeraufhängung nicht zu blockieren.

Beispielsweise kann der negative Schneidkantenwinkel eines Scharmeißels in der genannten Blockierstellung im Bereich von -10° bis -30° zur vertikalen betragen.

In der "normalen" Betriebsstellung, in der die zweite Vorspannvorrichtung noch nicht nachgegeben hat, kann der genannte Schneidkantenwinkel positiv sein und beispielsweise +10° bis +20° betragen. Je nach gewünschter Aggressivität kann der positive Schneidkantenwinkel jedoch auch größer oder kleiner als der genannte Bereich sein.

Die Lenker der Lenkeranordnung können, zumindest so lange der zweite Lenker seine Ausgangslänge noch nicht verändert bzw. die Ausgangslage seines Anlenkpunkts noch nicht verschoben hat, ein Viergelenk bilden, dass zumindest näherungsweise als Parallelogramm ausgebildet ist, so dass der Scharträger und damit das Säschar bei normalen Auf- und Abbewegungen zur Bodenanpassung ohne Winkelverstellung parallel geführt wird.

In Weiterbildung der Erfindung kann die Tiefenführungsrolle am Scharträger, an dem auch das Säschar angebracht ist, befestigt sein, so dass die Tiefenführungsrolle Höhenbewegungen des Säschars und auch Verschwenkbewegungen des Säschars mitmacht. Insbesondere kann die Tiefenführungsrolle hierdurch auch eine Wegschwenkbewegung mitmachen, wenn das Säschar gegen ein Hindernis fährt und in der genannten Weise unter Überwindung der Vorspannung der zweiten Vorspannvorrichtung nach hinten wegschwenkt.

Vorteilhafterweise kann die Tiefenführungsrolle dabei am Scharträger so angeordnet sein, dass die Tiefenführungsrolle beim Nach-hinten-Schwenken des Säschars eine Schwenkbewegung nach oben ausführt, um leichter über das Hindernis hinwegzukommen.

Die Tiefenführungsrolle kann an dem Scharträger ortsfest, aber drehbar befestigt sein. Zur Verstellung der Arbeitstiefe kann die Tiefenführungsrolle dabei in verschiedenen Positionen am Scharträger befestigt werden, beispielsweise durch ein Lochbild für die Achse der Tiefenführungsrolle oder auch durch verfeinerte Verstellmechanismen wie eine Schiebeführung beispielsweise in Form einer Langlochführung mit zugehörigem Klemmmechanismus oder einem Hebelmechanismus zur Höhenverstellung der Tiefenführungsrolle relativ zum Säschar. In der jeweils eingestellten Position ist dann aber die Tiefenführungsrolle fest am Scharträger fixiert.

Alternativ oder zusätzlich kann eine Verstellung der Arbeitstiefe auch durch eine Verstellung der Länge des zweiten Lenkers erreicht werden, die in der unausgelenken Grundstellung der zweiten Vorspannvorrichtung gegeben ist, so dass der Scharträger verkippt und hierdurch die Tiefenführungsrolle gegenüber dem Säschar in eine andere Höhenstellung verbringt. Hierfür kann es nützlich sein, als Versteller für die Länge des zweiten Lenkers bzw. für die Position dessen Anlenkpunkts einen doppelt wirkenden Druckmittelzylinder zu verwenden, der in verschiedene Stellungen gefahren und dort eingefroren bzw. eingespannt werden kann, so dass er in verschiedenen Grundstellungen eine Vorspannung gegen Auslenken bereitstellen kann.

Die beiden Vorspannvorrichtungen können wie gesagt voneinander verschieden ausgebildet sein.

Die erste Vorspannvorrichtung zum Vorspannen des ersten Lenkers auf den Boden zu bzw. zu einer vorbestimmten Ausgangsstellung hin kann vorteilhafterweise eine Quetschelemente-Lagerung für den ersten Lenker am Maschinenrahmen bzw. einem damit verbundenen Träger umfassen. Solche Quetschelemente-Lagerungen sind per se bekannt und können beispielsweise Gummischnüre oder gummiartige Quetschelemente umfassen, die zwischen dem ersten Lenker und dem genannten Tragarm vorgesehen sein können. Beispielsweise kann der erste Lenker an seinem trägerseitigen Endabschnitt mit einem hülsenförmigen Lagerauge den Träger umgreifen, der eine von der Zylinderform abweichende Umfangskonturierung besitzen kann, so dass sich über den Umfang verteilt mehrere Taschen ergeben, in denen Quetschelemente angeordnet werden. Dabei können mehrere Quetschelemente auch miteinander zu einem Quetschelementepack verbunden sein, oder es kann auch ggf. ausreichend sein, nur ein Quetschelement vorzusehen.

Vorzugsweise sind das eine oder die mehreren Quetschlagerelemente in einer unverdrehten Ausgangsstellung des ersten Lenkers bereits leicht gequetscht bzw. vorgespannt oder zumindest spielfrei zwischen Lenker und Träger eingepasst, so dass bei Verschwenken des ersten Lenkers aus der Ausgangs- bzw. Neutralstellung heraus die Quetschelemente eine zunehmend stärker werdenden Quetschung erfahren, so dass der erste Lenker von der Quetschelemente-Lagerung zu seiner Ausgangs- bzw. Neutralstellung zurück getrieben bzw. vorgespannt ist.

Grundsätzlich käme es auch in Betracht, alternativ oder zusätzlich zu einer solchen Quetschelementelagerung als erste Vorspannvorrichtung eine mechanische Feder vorzusehen, mittels derer der erste Lenker beaufschlagbar ist, beispielsweise in Form einer Blattfeder oder auch einer Spiralfeder, mittels derer der erste Lenker auf den Boden zu vorspannbar und/oder elastisch nach oben gegen entsprechende Federkräfte auslenkbar ist. Alternativ oder zusätzlich könnte auch ein Druckmittelzylinder als erste Vorspannvorrichtung fungieren, der von einem Druckspeicher und/oder einer Schlepperdruckquelle her mit Vorspanndruck beaufschlagt wird, um die elastische Vorspannung des ersten Lenkers zu erzielen. Ein solcher Druckmittelzylinder kann einfach oder doppeltwirkend ausgebildet sein.

Die zweite Vorspannvorrichtung, die den zweiten Lenker bezüglich einer Längenänderung und/oder einer Verstellung des verschiebbaren Anlenkpunkts beaufschlagt, umfasst in vorteilhafter Weiterbildung der Erfindung einen Druckmittelzylinder, der den zweiten Lenker bilden kann und/oder bei Vorsehen eines verschiebbaren Anlenkpunktes sich einerseits am Anlenkpunkt und andererseits an einer Lagerkonsole abstützen kann, um den Anlenkpunkt zu verschieben. Ein solcher Druckmittel- oder Hydraulikzylinder kann sich längen und verkürzen, insbesondere teleskopieren, so dass eine Veränderung der Länge des Lenkers erreicht wird, wenn der Druckmittelzylinder den zweiten Lenker bildet.

Alternativ oder zusätzlich kann als zweite Vorspannvorrichtung aber auch ein mechanisches Federbein Verwendung finden, welches den zweiten Lenker bildet bzw. in genannter Weise den verschiebbaren Anlenkpunkt beaufschlagen kann, wobei auch ein solches mechanisches Federbein teleskopieren kann. Gegebenenfalls kann auch eine Hybridlösung Verwendung finden, bei der ein mechanisches Federbein zusätzlich eine Druckmittelkammer aufweist, über die die aufbringbare Stellkraft bzw. Vorspannkraft des Federbeins über die mechanische Feder hinaus gesteuert werden kann.

In vorteilhafter Weiterbildung der Erfindung kann die Vorspannkraft der ersten Vorspanneinrichtung und/oder die Vorspannkraft der zweiten Vorspannvorrichtung variabel verstellt werden, um die Säscharaufhängung an verschiedene Bodenbeschaffenheiten und/oder auch verschiedene Arbeitstiefen anpassen zu können. Beispielsweise kann für die Bereitstellung der Vorspannkraft über einen Druckmittelzylinder ein einstellbarer Druckspeicher und/oder eine verstellbare Schlepperdruckquelle Verwendung finden.

Die Erfindung wird nachfolgend anhand bevorzugter Ausführungsbeispiele und zugehörigen Zeichnungen näher erläutert. In den Zeichnungen zeigen:
- Fig. 1:: Eine Seitenansicht einer landwirtschaftlichen Bodenbearbeitungsvorrichtung in Form eine Sämaschine, die mehrere Säscharreihen aufweist,
- Fig. 2:: Eine Seitenansicht einer Säscharreihe der Sämaschine aus Figur 1, die die Lenkeraufhängung für das Säschar in einer Arbeitsstellung zeigt, in der die Schneidkante des Scharmeißels unter einem positiven Schneidkantenwinkel angestellt ist und die Tiefenführungsrolle Bodenkontakt hat,
- Fig. 3:: Eine perspektivische Heckansicht der Sämaschine aus Figur 1, die die Verteilerköpfe zum Verteilen des Saatguts an die verschiedenen Säschare sowie die nachlaufenden Zustreicher zeigt,
- Fig. 4:: Eine Seitenansicht eines Säschars und dessen Lenkeraufhängung gemäß einer Ausführungsvariante, bei der der zweite Lenker für den Scharträger mit seinem maschinenrahmenseitigen Anlenkpunkt am ersten Lenker angelenkt ist, wobei das Säschar in einer Arbeitsstellung gezeigt ist, in der die Tiefenführungsrolle den Boden berührt,
- Fig. 5:: Eine Seitenansicht einer vorteilhaften Ausführungsvariante der Lenkeraufhängung eines Säschars, bei der der zweite, obere Lenker, seinen maschinenrahmenseitigen Anlenkpunkt, anders als bei der Variante nach Figur 4, nicht am ersten Lenker, sondern davon beabstandet am Maschinenrahmen bzw. einem damit verbundenen Träger besitzt, wobei auch hier das Säschar in einer Arbeitsstellung mit der Tiefenführungsrolle am Boden gezeigt ist,
- Fig. 6:: Eine Seitenansicht des Säschars aus Figur 5, wobei der Säscharträger durch Längung des oberen zweiten Lenkers in eine Stellung für geringere Arbeitstiefe bzw. seichtere Ablage eingestellt ist,
- Fig. 7:: Eine Seitenansicht des Säschar aus den Figuren 5 und 6 in einer Stellung beim Anfahren an ein Hindernis, wobei der Scharmeißel nach hinten weggeschwenkt und der Scharträger auf den Schwenkbegrenzer gefahren ist, der ein weiteres Verschwenken gegenüber dem ersten Lenker verhindert,
- Fig. 8:: Eine Seitenansicht des Säschars in einer Stellung, die gegenüber Figur 7 durch Verschwenken des ersten Lenkers weiter nach oben verschwenkt ist, wobei der Scharträger immer noch gegen den Schwenkbegrenzer gefahren ist und sowohl der Scharmeißel als auch die Tiefenführungsrolle über den Boden ausgehoben sind,
- Fig. 9:: Eine Seitenansicht des Säschars, ähnlich Figur 8, wobei ein weiteres nach oben schwenken des ersten Lenkers durch einen Schwenkbegrenzer verhindert ist,
- Fig. 10:: Eine ausschnittsweise Detailansicht der Quetschelemente-Lagerung des ersten Lenkers an einem Profilträger nach einer Ausführungsform der Erfindung, gemäß der vier Quetschelemente aus einem gummiartigen Material in Taschen zwischen einem hülsenförmigen Lagerauge des ersten Lenkers und dem Träger eingesperrt sind,
- Fig. 11:: Eine ausschnittsweise Detailansicht der Anlenkung des ersten Lenkers an der maschinenrahmenseitigen Aufhängungsschwenkachse, wobei als erste Vorspannvorrichtung ein Druckmittelzylinder am ersten Lenker angelenkt ist,
- Fig. 12:: Eine Seitenansicht der Lenkeraufhängung gemäß Figur 11, die auf den zweiten Lenker und den Scharträger mit Scharmeißel und Tiefenführungsrolle zeigt,
- Fig. 13:: Eine ausschnittsweise Seitenansicht der schwenkbaren Anlenkung des ersten Lenkers an der maschinenrahmenseitigen Aufhängungsschwenkachse, wobei als erste Vorspannvorrichtung anstelle eines Druckmittelzylinders ein mechanisches Federbein am ersten Lenker angelenkt ist,
- Fig. 14:: Eine Seitenansicht eines Säschars, ähnlich Figur 5, wobei als zweiter Lenker kein Druckmittelzylinder, sondern ein mechanisches Federbein vorgesehen ist,
- Fig. 15:: Eine Seitenansicht eines Säschars, ähnlich Figur 5, wobei der zweite Lenker nicht oberhalb, sondern unterhalb des ersten Lenkers angeordnet und am Scharträger angelenkt ist, wobei auch hier der zweite Lenker als Druckmittelzylinder ausgebildet ist,

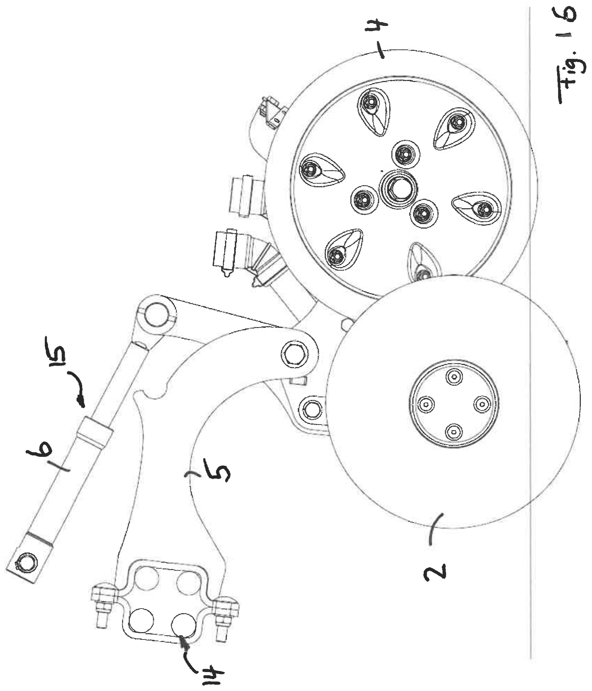

- Fig. 16:: Eine Seitenansicht eines Säschars, ähnlich Figur 5, wobei als Scharwerkzeug anstelle eines Scharmeißels eine Scharscheibe vorgesehen ist,

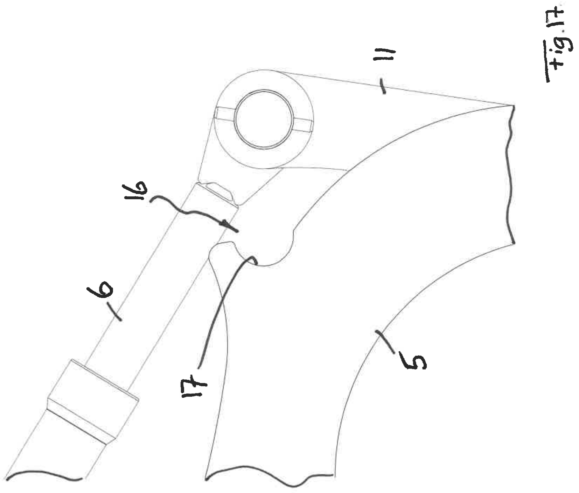

- Fig. 17:: Eine ausschnittsweise Seitenansicht der ersten und zweiten Lenker, die den Schwenkbegrenzer zur Begrenzung der Verschwenkbarkeit des Scharträgers gegenüber dem ersten Lenker zeigt, wobei der Schwenkbegrenzer in einer noch nicht aktiven Stellung dargestellt ist,
- Fig. 18:: Eine Seitenansicht der Lenkeraufhängung, ähnlich Figur 17, wobei der Schwenkbegrenzer nicht am ersten Lenker selbst fest angebracht, sondern verstellbar ausgebildet ist,
- Fig. 19:: Eine Seitenansicht der Lenkeraufhängung aus Figur 18, die zusätzlich auch den angelenkten Scharträger und die daran befestigten Elemente, Tiefenführungsrolle und Scharmeißel, zeigt,
- Fig. 20:: Eine Seitenansicht der Lenkeraufhängung für das Säschar, in einer Ausführungsform ähnlich Figur 12, wobei der erste Lenker und damit die gesamte Lenkeraufhängung, durch den am ersten Lenker angelenkten Vorspannzylinder in eine ausgehobene Nicht-Arbeitsstellung ausgehoben ist,

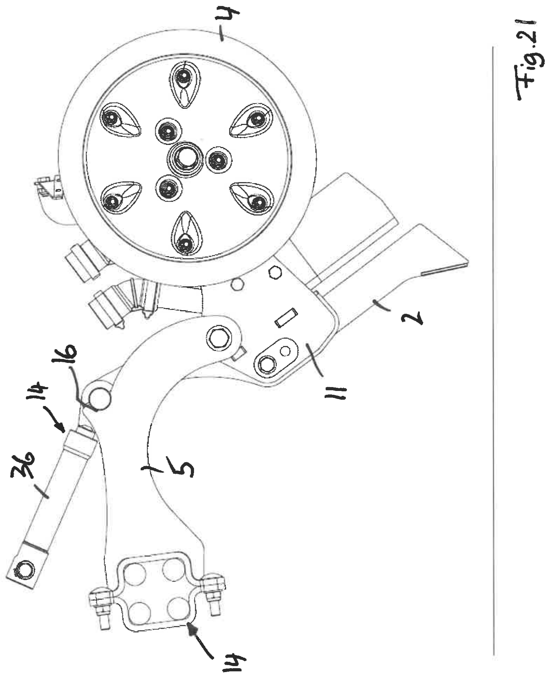

- Fig. 21:: Eine Seitenansicht der Lenkeraufhängung, in einer Ausführungsform ähnlich Figur 9, wobei das Säschar durch den doppelt wirkenden Druckmittelzylinder, der den zweiten Lenker bildet, in eine ausgehobene Nicht-Arbeitsstellung gezeigt ist,
- Fig. 22:: Eine Seitenansicht der Lenkeraufhängung, in einer Ausführungsform ähnlich Figur 20, wobei die Hydraulikzylinder der ersten und zweiten Vorspannvorrichtungen jeweils doppeltwirkend ausgebildet sind und eingefahren sind, um das Säschar in eine ausgehobene Nicht-Arbeitsstellung zu verbringen,
- Fig. 23:: Eine Seitenansicht der Lenkeraufhängung, in einer Ausführung ähnlich Figur 8, wobei die Beaufschlagung des Druckmittelzylinders der zweiten Vorspannvorrichtung aus einem Druckspeicher gezeigt ist, und
- Fig. 24:: Eine Seitenansicht der Lenkeraufhängung, ähnlich Figur 23, wobei die Beaufschlagung des Druckmittelzylinders der zweiten Vorspannvorrichtung mit variablem Vorspanndruck über ein Steuerventil von einer Schlepperdruckquelle her, gezeigt ist.

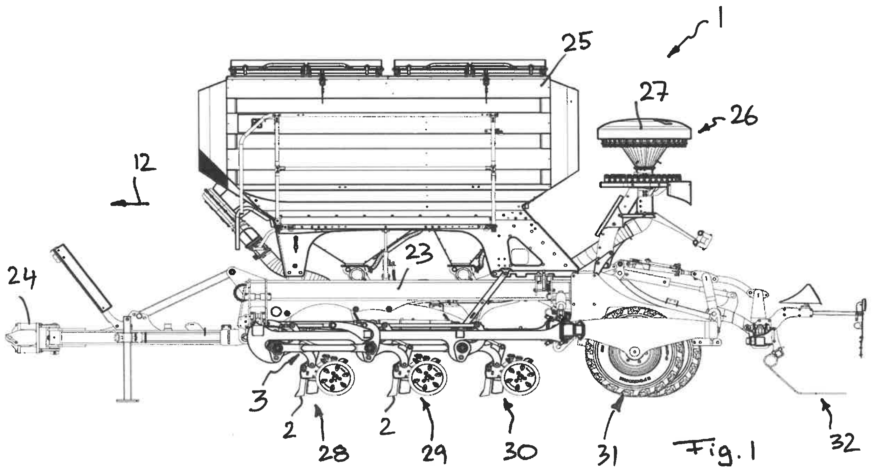

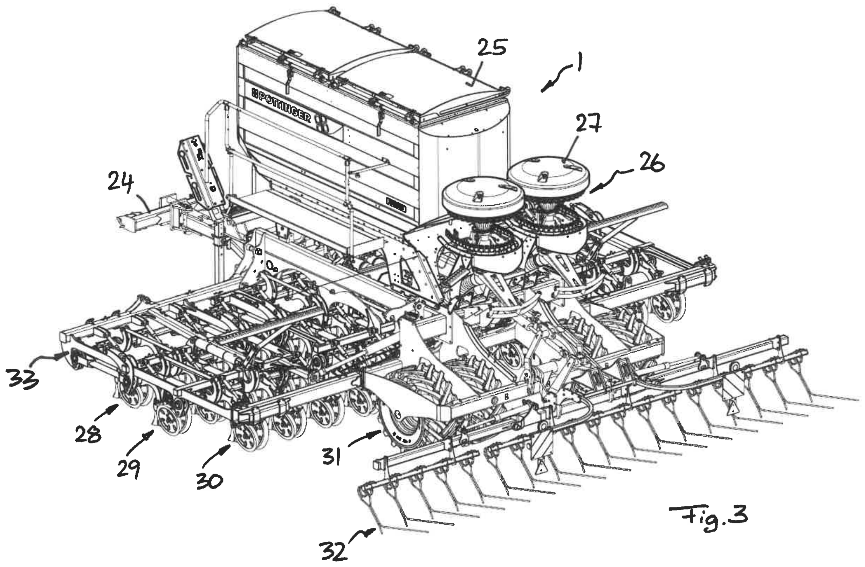

Wie Figur 1 zeigt, kann die landwirtschaftliche Bodenbearbeitungsvorrichtung als Sämaschine 1 ausgebildet sein bzw. einen Teil einer solchen Sämaschine 1 bilden, wobei die genannte Sämaschine 1 in an sich bekannter Weise als Anbaugerät zum Anbauen an einen nicht gezeigten Schlepper ausgebildet sein kann. Ein Maschinenrahmen 22, der über eine Anbauvorrichtung 24 wie zum Beispiel eine Deichsel an den Schlepper angebaut werden kann, trägt einen Saatgut- und/oder Düngertank 25, aus dem Saatgut und/oder Dünger oder allgemein körnige Ausbringstoffe über ein Verteilersystem 26 zu Säscharen 2 verteilt und gefordert wird. Das genannte Verteilersystem 26 kann beispielsweise pneumatisch arbeitende Verteilerköpfe 27 umfassen, vgl. Figur 1 und Figur 3 und das Saatgut bzw. den Dünger in Verteilerleitungen verteilen, die zu den Säscharen 2 führen.

Wie Figur 1 und Figur 3 zeigen, kann die Sämschine 1 mehrere Reihen 28, 29, 30 von Säscharen 2 umfassen, die in Fahrtrichtung 12 hintereinander angeordnet sind. In jeder Reihe 28, 29, 30 sind eine Vielzahl von Säscharen 2 nebeneinander angeordnet, vgl. Figur 1 und Figur 3.

Wie aus den Figuren 1 und 3 hervorgeht, kann die Sämaschine 1 mittels eines Fahrwerks 31 beispielsweise in Form von mehreren Packerradwalzen am Boden abgestützt sein, wobei das Fahrwerk 31 den Säscharreihen 28, 29, 30 nachlaufen kann.

Wie die Figuren 1 und 3 ferner zeigen, kann die Sämaschine 1 eine Nachbearbeitungseinheit 32 beispielsweise in Form einer Reihe von Zustreichern umfassen.

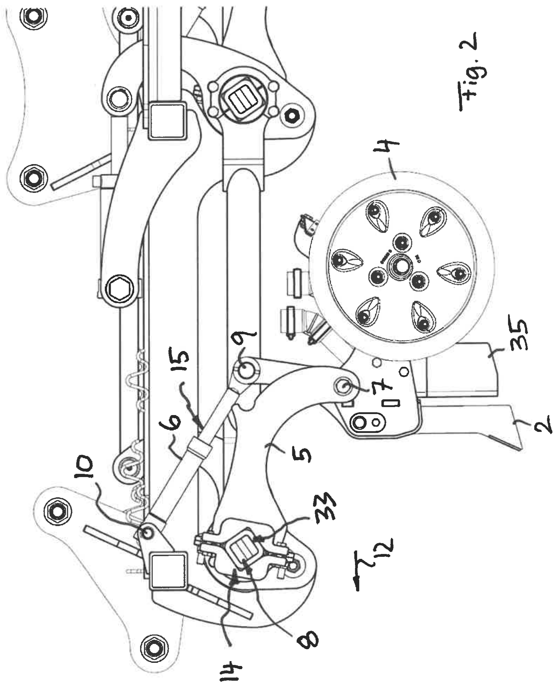

Die Säschare 2 sind am Maschinenrahmen 23 mittels einer Lenkeraufhängung 3 höhenbeweglich aufgehängt, vgl. Figur 2. Genauer gesagt können die Säreschare 2 an Querträgern 33 aufgehängt sein, die sich in Arbeitsposition liegend quer zur Fahrtrichtung 12 erstecken und gegebenenfalls im Bereich von Seitenflügeln nach oben aufklappbar sein können, um die Transportbreite einhalten zu können.

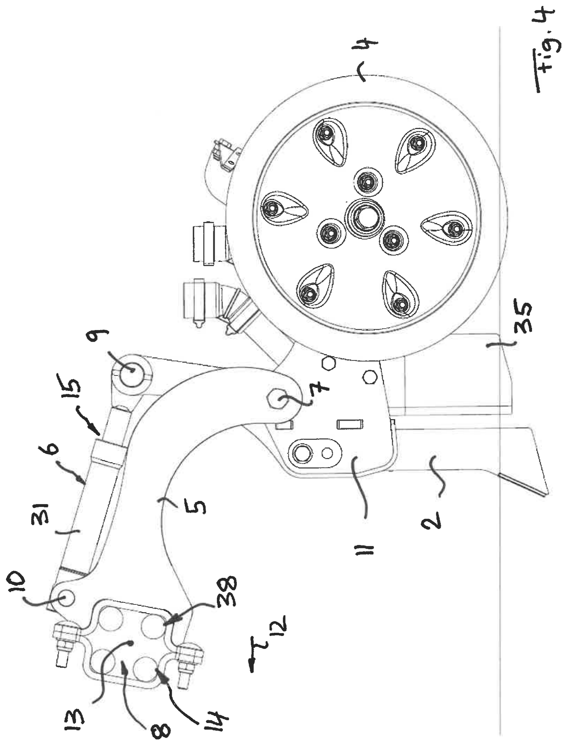

Wie die Figuren 2 und 4 zeigen, umfasst die Lenkeraufhängung 3 einen ersten Lenker 4 und einen zweiten Lenker 6, die mittels jeweils eines Anlenkpunktes 7 bzw. 9 gelenkig an einem Scharträger 11 angelenkt sind. Die genannten Anlenkpunkte 7 und 9 können dabei jeweils eine Schwenkachse definieren, die sich in Arbeitsstellung liegend quer zur Fahrtrichtung 12 erstreckt.

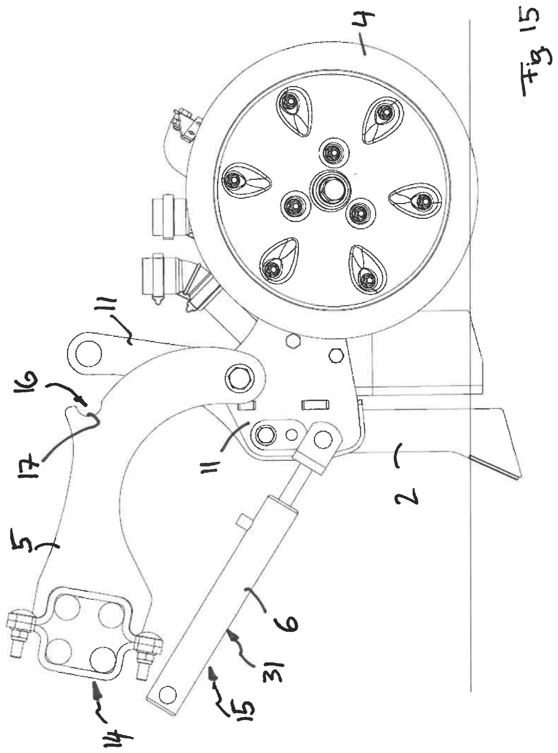

Der genannte Scharträger 11 trägt jeweils ein Säschar 2, das vorteilhafterweise als Scharmeißel ausgebildet sein kann, gegebenenfalls aber auch in Form einer Scharscheibe, vgl. Figur 15, die mit einer Schwenkachse an dem genannten Scharträger 11 befestigt ist, die sich liegend quer zur Fahrtrichtung 12 erstreckt und zur genannten Fahrtrichtung 12 spitzwinklig geneigt angestellt sein kann.

Wie beispielsweise die Figuren 2 und 4 zeigen, ist an dem genannten Scharträger 11 ferner eine Tiefenführungssäule 4 angeordnet, um die Arbeitstiefe des Säschars 2 zu steuern. Die genannte Tiefenführungsrolle 4 oder auch ein Paar von Tiefenführungsrollen 4 ist dabei drehbar am Scharträger 11 um eine Rollenachse liegend quer zur Fahrtrichtung 12 gelagert.

Vorteilhafterweise ist die Tiefenführungsrolle 4 dem Säschar 2 nachlaufend angeordnet, wobei in der bestimmungsgemäßen Arbeitsposition, wie sie beispielsweise Figur 2 und Figur 4 zeigt, das Säschar 2 mit seiner in den Boden grabenden Schneidkante 34 in Fahrtrichtung 12 vor dem Anlenkpunkt 7 des ersten Lenkers 5 und die Tiefenführungsrolle 4 mit ihrer Rollenachse in Fahrtrichtung 12 hinter dem genannten Anlenkpunkt 7 angeordnet sein kann.

Wie beispielsweise die Figuren 2 und 4 zeigen, ist am Scharträger 11 ferner noch ein Särohr 35 angebracht, über das Saatgut bzw. Dünger in die von der Säschar 2 gezogene Bodenfurche abgelegt werden kann. Das genannte Särohr 35 oder gegebenenfalls auch ein anderes Ablege- oder Ausbringelement kann zwischen dem Säschar 2 und der Tiefenführungsrolle 4 angeordnet sein, das heißt, die Tiefenführungsrolle 4 kann auch dem Särohr 35 bzw. im entsprechenden Ausbringelement nachlaufen, um die vom Säschar 2 gezogene Bodenfurche nach Ablegen des Saatguts und/oder Düngers zu schließen.

Wie beispielsweise die Figuren 2 und 4 zeigen, ist der erste Lenker 5 mit seinem maschinenrahmenseitigen Ende an einem Querträger 33 um eine Aufhängungsschwenkachse 13 schwenkbar gelagert, welche sich liegend quer zur Fahrtrichtung 12 erstreckt. Der genannte erste Lenker 5 kann sich dabei von der Aufhängungsschwenkachse 13 entgegen der Fahrtrichtung 12 nach hinten und nach unten zum Anlenkpunkt 7 erstrecken, vgl. Figur 2 oder Figur 4.

Der zweite Lenker 6 kann sich von seinem Anlenkpunkt 9 am Scharträger 11 in Fahrtrichtung 12 nach vorne und oben erstrecken, vgl. beispielsweise Figur 2 und Figur 4. Vorteilhafterweise kann der zweite Lenker 6 mit seinem maschinenrahmenseitigen Ende einen Anlenkpunkt 10 an einem weiteren Querträger 33 oder einem mit dem Maschinenrahmen 23 verbundenen Konsolenteil besitzen, vgl. Figur 2. Alternativ ist es aber auch möglich, den vorderen Anlenkpunkt 10 des zweiten Lenkers 6 am ersten Lenker 5 vorzusehen, vgl. Figur 4, insbesondere in der Nähe des maschinenrahmenseitigen vorderen Endes des ersten Lenkers 5 und/oder im Bereich der Aufhängungsschwenkachse 13, vgl. Figur 4.

Die Anlenkpunkte 7 und 9 der beiden Lenker 5 und 6 am Scharträger 11 sind indes voneinander beabstandet.

Vorteilhafterweise können die beiden Lenker 5 und 6 mit ihren Anlenkpunkten 7, 8, 9 und 10 ein Viergelenk bilden, das zumindest näherungsweise als Parallelogramm ausgebildet sein kann, so dass der Scharträger 11 Höhenbewegungen ausführen kann und dabei parallel geführt ist, so dass der Scharträger 11 nicht oder nur geringfügig verschwenkt, wenn er Höhenbewegungen zur Bodenanpassung ausführt.

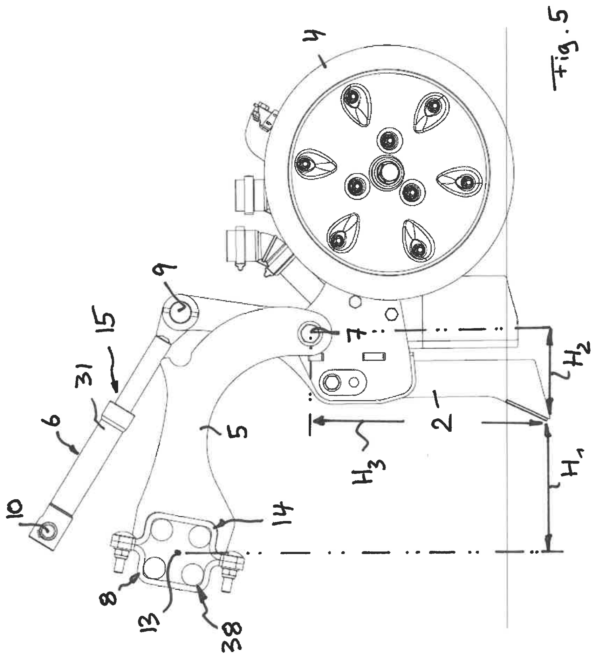

Wie ein Vergleich der Figuren 5, 6 und 7 zeigt, kann durch Verändern der Länge des zweiten Lenkers 6 die Arbeitstiefe des Säschars 2 verschieden eingestellt werden. Längenänderungen des zweiten Lenkers 6 führen zu einem Verkippen des Scharträgers 11, wodurch sich die Höhenposition der Tiefenführungsrolle 4 relativ zum Säschar 2 ändert, wodurch die Arbeitstiefe entsprechend eingestellt werden kann. Alternativ oder zusätzlich zu einer Veränderung der Länge des zweiten Lenkers 6 kann auch einer von dessen Anlenkpunkten 9 oder 10 verschiebbar ausgebildet sein, beispielsweise in einer Langlochführung.

Vorteilhafterweise kann der genannte zweite Lenker 6 durch einen teleskopierbaren Druckmittelzylinder 36 gebildet sein, der doppelt wirkend ausgebildet werden kann, um verschiedene Längen und damit verschiedene Arbeitstiefen einstellen zu können, wie dies die Figuren 5, 6 und 7 zeigen. Alternativ wäre es aber auch möglich, beispielsweise an der Kolbenstange eines solchen Druckmittelzylinders 36 eine Längenverstellvorrichtung beispielsweise in Form einer Spindelmutter vorzusehen.

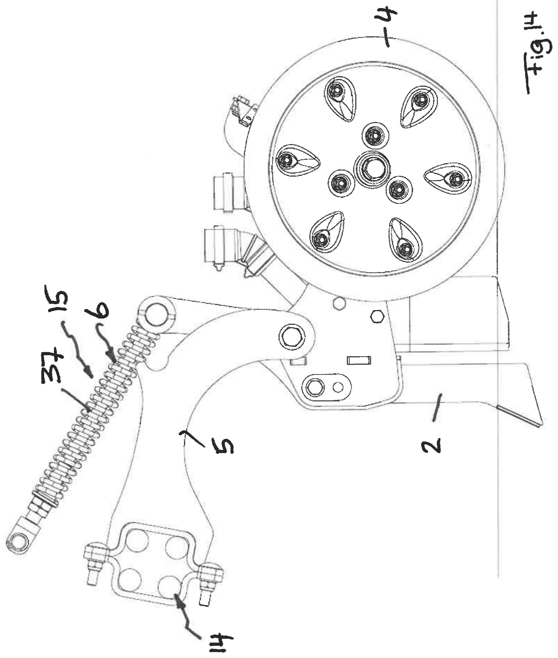

Alternativ oder zusätzlich kann anstelle eines Druckmittelzylinders 36 der zweite Lenker 6 aber auch von einem mechanischen Federbein 37 gebildet sein, vgl. Figur 14, dass unter Beaufschlagung einer mechanischen Feder, beispielsweise einer Schraubenfeder, längenveränderbar sein kann, insbesondere teleskopierbar. Dabei kann auch hier durch eine Verstellvorrichtung die Grundlänge verstellbar sein.

Der genannte Druckmittelzylinder 36 oder auch das mechanische Federbein 37 kann dabei eine zweite Vorspannvorrichtung für den zweiten Lenker 6 bilden oder einen Teil dieser Vorspannvorrichtung 15 bilden, die im normalen Arbeitsbetrieb den zweiten Lenker 6 in seiner voreingestellten Grundlänge hält bzw. bei verschiebbarem Anlenkpunkt diesen Anlenkpunkt 10 in der eingestellten Position hält. Die Vorspannkraft der zweiten Vorspannvorrichtung 15 wird dabei ausreichend groß eingestellt, um im normalen Arbeitsbetrieb ohne Anfahren an Hindernisse, wie Steine, Felsen oder dicke Wurzelstöcke den Druckmittelzylinder 36 bzw. das Federbein 37 oder auch den verschiebbaren Anlenkpunkt festzuhalten und nicht nachzugeben, so dass die Lenkeraufhängung 3 nach Art einer Mehrlenker-Aufhängung, insbesondere nach Art einer Parallelogrammführung arbeiten kann und ohne Veränderung der Länge des zweiten Lenkers 6 und/oder ohne Verschiebung von dessen Anlenkpunkt ein Scharnieren der beiden Lenker 5 und 6 nach oben und unten und dementsprechend Höhenbewegungen des Säschars 2 zulässt.

Die elastische Vorspannung für solche Höhenbewegungen zur Bodenanpassung wird dabei von einer ersten Vorspannvorrichtung 14 aufgebracht, die den ersten Lenker 5 beaufschlagt, insbesondere im Arbeitsbetrieb zum Boden hin vorspannt.

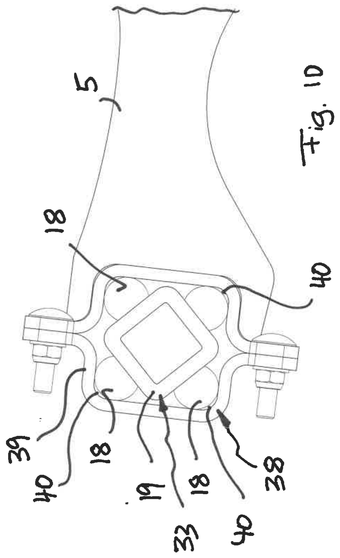

Diese erste Vorspannvorrichtung 14 kann insbesondere durch eine Quetschelemente-Lagerung 38 gebildet sein, mittels derer der erste Lenker 5 an der Aufhängungsschwenkachse 13 aufgehängt ist. Wie Figur 10 zeigt, kann eine solche Quetschelemente-Lagerung 38 am maschinenrahmenseitigen Ende des ersten Lenkers 5 ein hülsenförmiges Lagerauge 39 umfassen, welches den Querträger 33 umgreift. Der besagte Querträger 33 kann dabei als Profilträger 19 ausgebildet sein, der eine von der Zylinderform abweichende Umfangskontur besitzt. Auch das genannte Lagerauge 39 besitzt eine von der Zylinderform abweichende Innenumfangskontur, so dass sich zwischen Lagerauge 39 und Profilträger 19 Taschen 40 bilden, in denen gummielastische Quetschlagerelemente 18 eingepasst sind, vgl. Figur 10.

Wird der erste Lenker 5 gegenüber dem Profilträger 19 um die Aufhängungsschwenkachse 13 verdreht, erfahren die Quetschlagerelemente 18 eine zunehmende elastische Verformung bzw. Quetschung, wobei die Reaktionskräfte der Quetschlagerelemente 18 der genannten Verdrehung aus der Grundstellung heraus entgegenwirken.

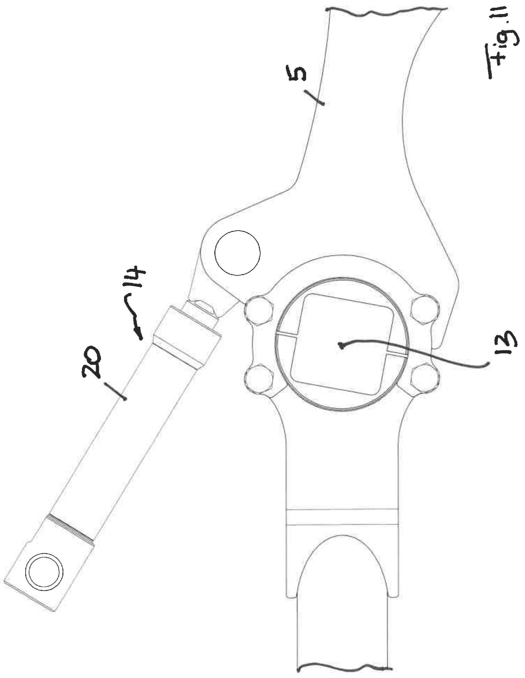

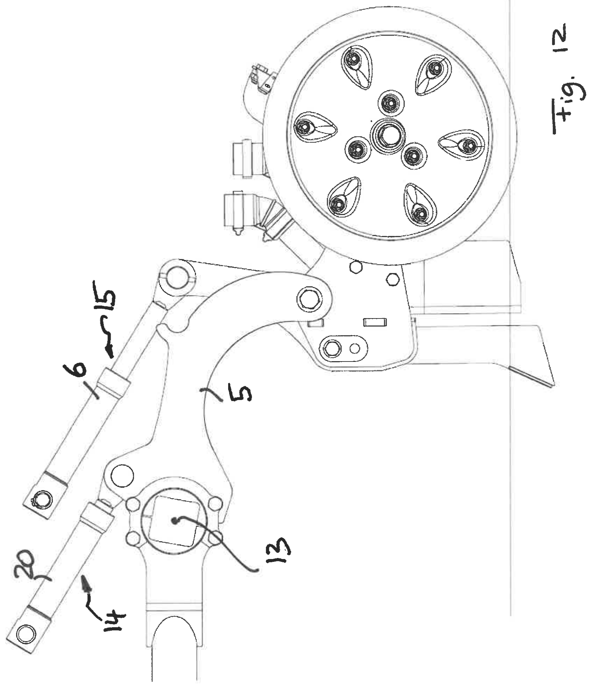

Alternativ oder zusätzlich zu einer solchen Quetschelemente-Lagerung 38 kann die erste Vorspannvorrichtung 14 aber auch einen Druckmittelzylinder 20 umfassen, der an dem ersten Lenker 5 angelenkt und maschinenrahmenseitig abgestützt ist, um auf den ersten Lenker 5 ein Drehmoment bezüglich der Aufhängungsschwenkachse 13 auszuüben, mit Hilfe dessen der Lenker 5 vorgespannt werden kann, insbesondere auf den Boden hin vorgespannt werden kann, vgl. Figur 11 und Figur 12.

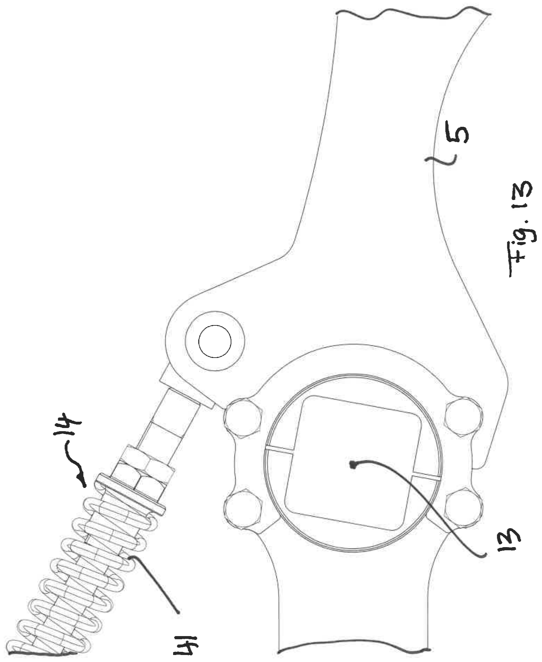

Alternativ zu einem solchen Druckmittelzylinder 20 kann die erste Vorspannvorrichtung 14 aber auch ein mechanisches Federbein 41 zur Vorspannung des ersten Lenkers 5 umfassen, vgl. Figur 13, wobei auch ein solches Federbein 41 von der Aufhängungsschwenkachse 13 beabstandet am ersten Lenker 5 angreifen und am Maschinenrahmen abgestützt sein kann, um auf den ersten Lenker 5 ein Drehmoment auszuüben.

Beispielsweise kann der vorgenannte Druckmittelzylinder 20 doppeltwirkend ausgebildet sein, um ähnlich der Quetschelemente-Lagerung 38 eine Rückstellung in eine Grundstellung aus beiden Auslenkungsrichtungen her zu bewirken.

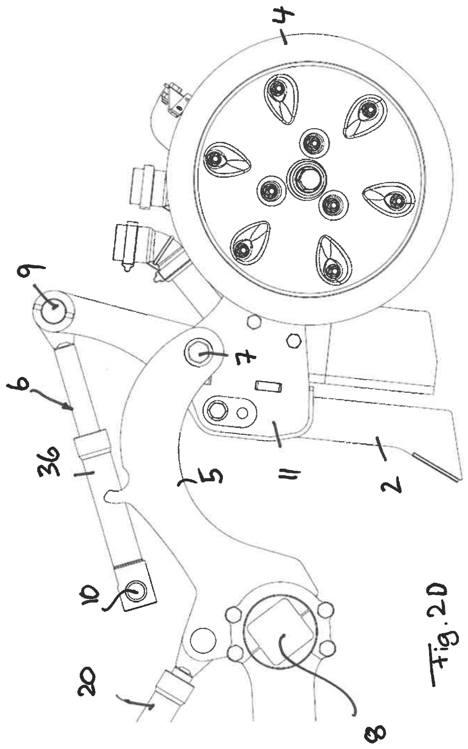

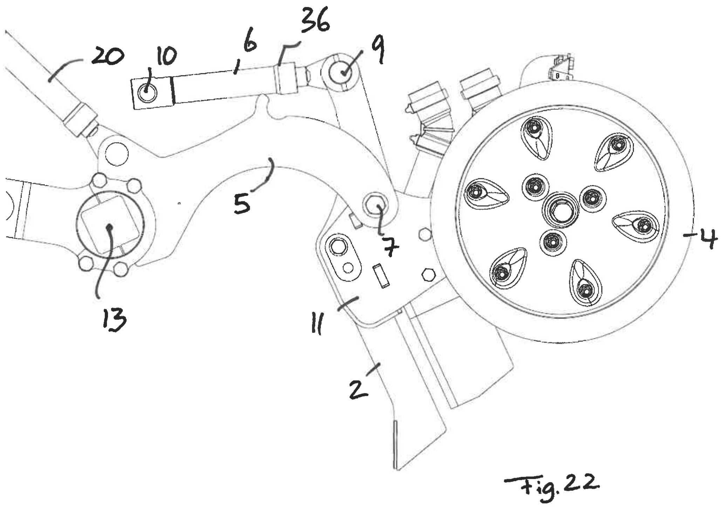

Ist der genannte Druckmittelzylinder 20 doppeltwirkend ausgebildet, kann die erste Vorspannvorrichtung 14 auch die Doppelfunktion erfüllen, den ersten Lenker 5 und damit das Säschar 2 in eine Nicht-Arbeitsstellung auszuheben, vgl. Figur 20 und Figur 22.

Während die genannte erste Vorspannvorrichtung 14 die Höhenbewegungen der Lenkeraufhängung 3 im normalen Arbeitsbetrieb zum Zwecke der Bodenanpassung steuert bzw. beeinflusst, kann die zweite Vorspannvorrichtung 15 insbesondere dazu dienen, einen Überlast- bzw. Anfahrschutz zu realisieren, wenn das Säschar 2 gegen ein Hindernis fährt.

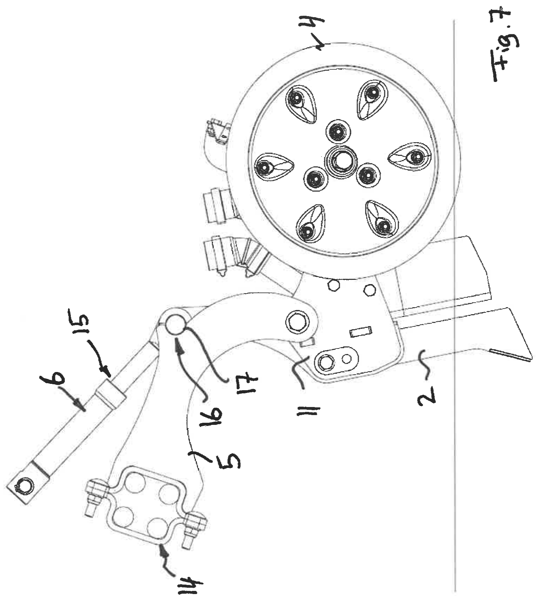

Übersteigen die auf das Säschar 2 wirkenden Bodenkräfte ein vorbestimmtes Maß, kann der Scharträger 11 und damit das Säschar 2 gegenüber dem ersten Lenker - also auch ohne, dass sich der erste Lenker 5 bewegen muss - nach hinten wegschwenken, vgl. Figur 7. Die erhöhten Bodenkräfte überwinden die Vorspannung der zweiten Vorspannvorrichtung 15, so dass der zweite Lenker 6 seine Länge ändert und/oder seinen Anlenkpunkt verschiebt. Insbesondere kann der genannte Druckmittelzylinder 36 teleskopieren bzw. das mechanische Federbien 37 teleskopieren, um die nach hinten Schwenkbewegung des Säschars 2 relativ zum ersten Lenker 5, also um den Anlenkpunkt 7 zuzulassen.

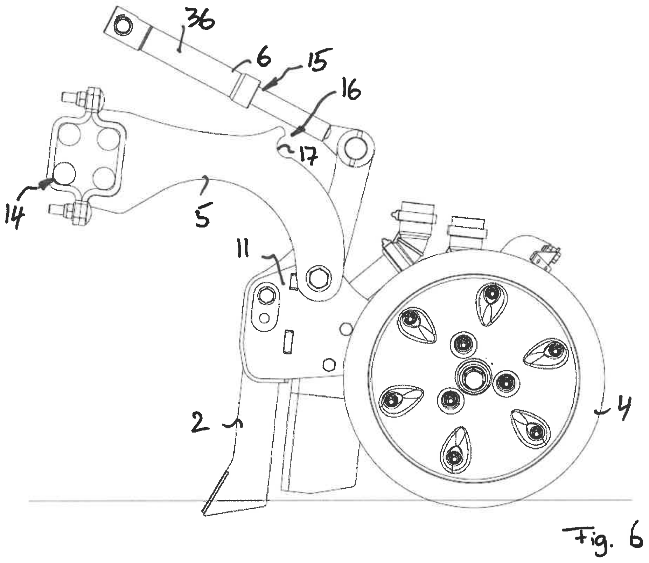

Der Scharträger 11 kann dabei so lange relativ zum ersten Lenker 5 verschwenken, bis ein Schwenkbegrenzer 16 aktiv wird. Beispielsweise kann am ersten Lenker 5 eine Anschlagkontur 17 vorgesehen sein, gegen die der Scharträger 11 mit einer dazu passenden Anschlagkontur fahren kann, wobei dies auch der Lagerbolzen sein kann, mit dem der zweite Lenker 6 am Scharträger 11 angelenkt ist, so dass der zweite Lenker 6 am ersten Lenker 5 anschlägt, um das Verschwenken des Scharträgers 11 zu begrenzen, vgl. vergleichend Figur 6 und Figur 7.

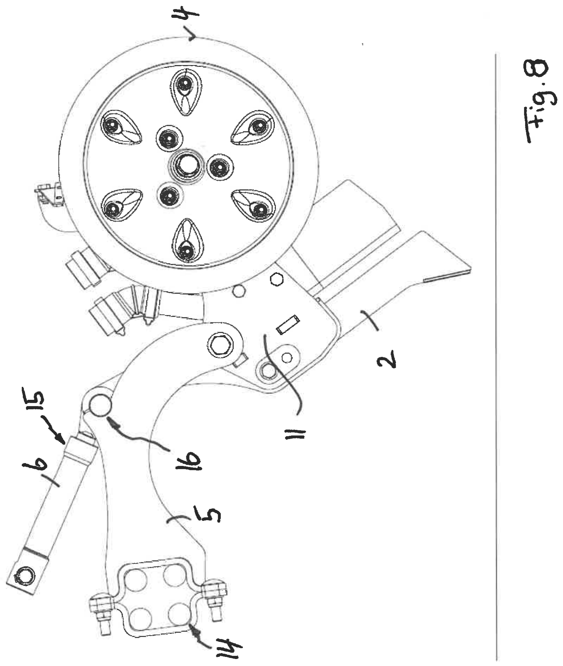

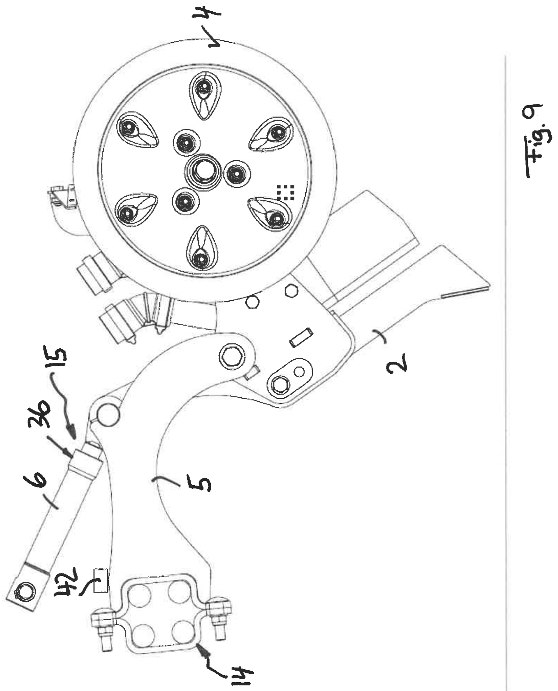

Wie ein Vergleich der Figuren 5 und 6 mit den Figuren 7 und 8 verdeutlicht, kann der Scharträger 11 unter Überwindung der Vorspannkraft der zweiten Vorspannvorrichtung 15 soweit gegenüber dem ersten Lenker 5 nach hinten schwenken, dass der Schneidkantenwinkel 21 der Schneidkante des Säschars 2 an dessen Vorderseite gegenüber der Vertikalen von - in der Ausgangsstellung positiv zu negativ wechselt, d.h. die Schneidkante verläuft im nach hinten geschwenkten Zustand, vgl. Figuren 8 und 9, von hinten unten nach vorne oben, wodurch die Säschar 2 leichter über das Hindernis hinwegkommt und die Lenkeraufhängung 3 nach oben drücken kann. Der in der Ausgangsstellung positive Schneidkantenwinkel 21, vgl. Figur 5 oder 6, ist optional, gleichwohl aber vorteilhaft, um eine aggressive Bodenbearbeitung zu erzielen, bei der sich die Säschar 2 in den Boden zu ziehen versucht, wodurch die Bodenanpresskraft von der Lenkeraufhängung 3 her klein gehalten werden kann.

Ist der Schwenkbegrenzer 16 aktiv geworden und verhindert ein weiteres Verschwenken des Scharträgers 11 gegenüber dem ersten Lenker 5, arbeitet die Lenkeraufhängung 3 nach Art einer Einarm-Aufhängung, das heißt, der erste Lenker 5 kann nach oben schwenken, wobei der Scharträger 11 und damit das Säschar 2 die Schwenkbewegung des ersten Lenkers 5 mitmacht. Ohne dass eine weitere Schwenkbewegung zwischen Scharträger 11 und erstem Lenker 5 auftreten würde, schwenkt das Säschar 2 zusammen mit dem ersten Lenker 5 noch weiter nach oben, um über ein Hindernis hinwegzukommen, vgl. Figur 8.

Wenn der Schwenkbegrenzer 16 den Scharträger 11 bzw. den zweiten Lenker 6 fängt, vgl. Figur 7, hat der zweite Lenker 6 und auch die zweite Vorspannvorrichtung 15, insbesondere in Form des Druckmittelzylinders 31 bzw. des mechanischen Federbeins 37 noch weiteren Stellweg zur Verfügung, so dass der erste Lenker 5 unter weiterer Längenänderung des zweiten Lenkers 6 noch weiter nach oben schwenken kann, so wie dies Figur 8 zeigt.

Die Schwenkbewegung des ersten Lenkers 5 nach oben kann dabei begrenzt werden, in dem der zweite Lenker 6, insbesondere in Form des Druckmittelzylinders 36 oder des Federbeins 37, auf Anschlag fährt bzw. seine maximal verkürzte Stellung oder maximal gelenkte Stellung erreicht hat.

Alternativ oder zusätzlich kann auch für den ersten Lenker 5 ein Anschlag 42 vorgesehen sein, vgl. Figur 9. Ein solcher Anschlag 42 für den ersten Lenker 5 schont den zweiten Lenker 6 in Form des Druckmittelzylinders 36 bzw. Federbein 37.

Wie Figur 15 zeigt, kann der zweite Lenker 6 - anders als in den zuvor beschriebenen Figuren - auch so verbaut sein, dass er keine Verkürzung, sondern eine Längung erfährt, wenn das Säschar 2 zusammen mit dem Scharträger 11 nach hinten wegschwenkt. Dies kann beispielsweise dadurch erreicht werden, dass der zweite Lenker 6 unterhalb des ersten Lenkers 5 angeordnet und am Scharträger 11 angelenkt wird, vgl. Figur 15.

Gleichzeitig verdeutlicht Figur 15 auch die Ausführungsmöglichkeit, den Schwenkbegrenzer 16 von der Anlenkung des zweiten Lenkers 6 zu trennen bzw. an einem anderen Abschnitt des Scharträgers 11 vorzusehen, vgl. Figur 15.

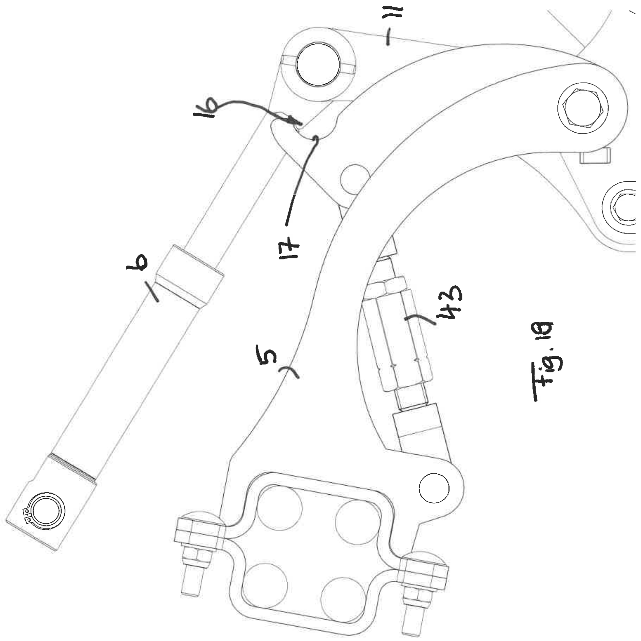

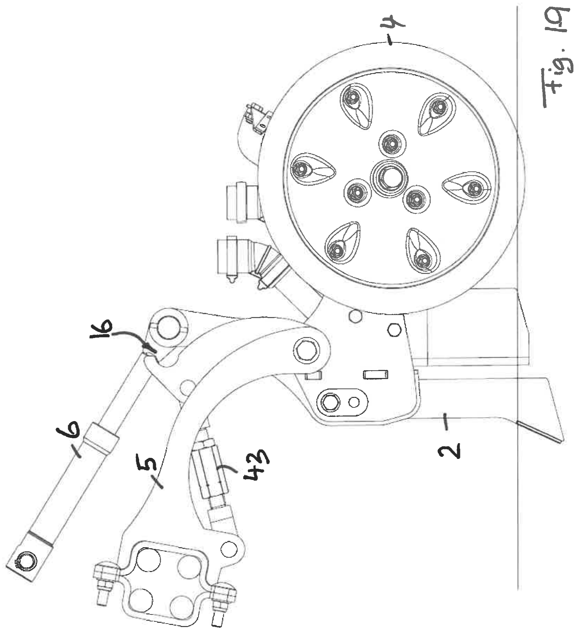

Wie die Figuren 18 und 19 verdeutlichen, kann der Schwenkbegrenzer 16 auch einstellbar ausgebildet werden, um den maximal zulässigen Verschwenkwinkel, um den sich der Scharträger 11 gegenüber dem ersten Lenker 5 verdrehen kann, variabel einstellen zu können. Dies kann beispielsweise durch einen Anschlagarm realisiert werden, der durch eine längenveränderbare Stütze 43 in verschiedene Anschlagpositionen und damit verschiedene Schwenkbegrenzungsstellungen verstellt werden kann.

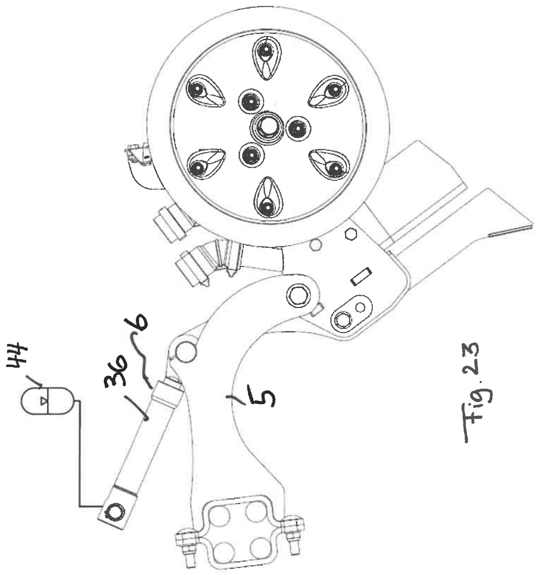

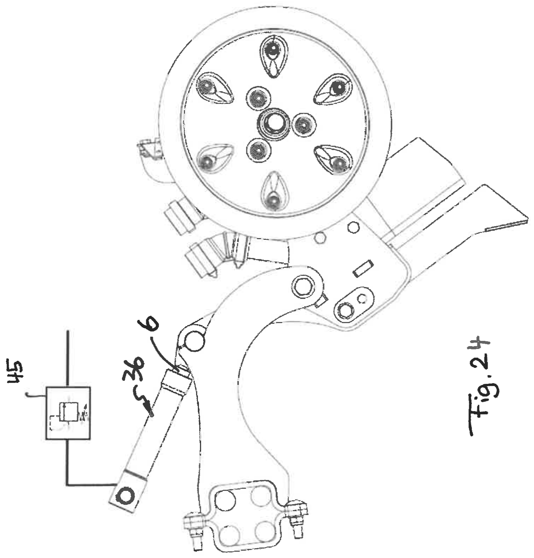

Wie die Figuren 23 und 24 verdeutlichen, kann die Vorspannkraft der zweiten Vorspannvorrichtung 15 vorteilhafterweise variabel eingestellt werden, beispielsweise durch einen einstellbaren Druckspeicher 44 oder auch durch ein Drucksteuerventil 45.

In analoger Weise kann auch die Vorspannkraft der ersten Vorspannvorrichtung 14 variabel eingestellt werden, wenn ein entsprechender Druckmittelzylinder verwendet wird, wie dies die Figuren 11 und 12 zeigen, wobei auch beispielsweise durch ein verstellbares mechanisches Federbein die Vorspannkraft verändert werden kann, vgl. Figur 13 und Figur 14.

Durch geschickte Gestaltung der Geometrie der Lenkeraufhängung 13 können die benötigten Vorspannkräfte begrenzt gehalten werden. Wie die Figur 5 zeigt, können die ersten und zweiten Lenker 5, 6 und deren Anlenkpunkte 7, 9 am Scharträger 11 derart angeordnet sein, dass am Scharträger 11 vom Säschar 2 her und/oder von der Tiefenführungsrolle 4 her wirkende Bodenkräfte in vertikaler Richtung einen Hebelarm H₁ bezüglich der genannten Aufhängungsschwenkachse 13 des ersten Lenkers 5 besitzt, der mindestens doppelt so groß oder mehr als dreifach so groß ist wie ein zweiter Hebelarm H₂ der genannten Bodenkräfte in vertikaler Richtung bezüglich des Anlenkpunkts 7 des ersten Lenkers 5 an dem Scharträger 11.

Insbesondere können die ersten und zweiten Lenker (5, 6) und deren Anlenkpunkte 7, 9 an dem Scharträger 11 derart angeordnet sein, dass horizontale, auf das Säschar 2 wirkende Bodenkräfte bezüglich des Anlenkpunkts 7 des ersten Lenkers 5 am Scharträger 11 einen Hebelarm H₃ besitzen, der mindestens doppelt so groß ist wie der Hebelarm H₂ vertikaler, auf das Säschar 2 und die Tiefenführungsrolle 4 wirkender Bodenkräfte bezüglich des genannten Anlenkpunkts 7 des ersten Lenkers 5 am Scharträger 7.

## Patentansprüche

1. Landwirtschaftliche Bodenbearbeitungsvorrichtung, insbesondere Sämaschine (1), mit zumindest einem Säschar (2) zum Ausbilden einer Bodenfurche, in der Saatgut und/oder Dünger ablegbar ist, einer höhenbeweglichen Lenkeraufhängung (3) zum höhenbeweglichen Aufhängen des Säschars (2), sowie zumindest einer dem Säschar (2) nachlaufenden Tiefenführungsrolle (4) zur Arbeitstiefenführung des Säschars (2), wobei die Lenkeraufhängung (3) zwei Lenker (5, 6) aufweist, die voneinander beabstandete, gelenkige Anlenkpunkte (7, 9) an einem das Säschar (2) tragenden Scharträger (11) besitzen, wobei ein erster der beiden Lenker (5) schwenkbar um eine liegende, sich quer zur Fahrtrichtung (12) erstreckende Aufhängungsschwenkachse (13) gelagert ist und ein zweiter der beiden Lenker (6) längenveränderbar ausgebildet ist und/oder einen verschieblichen Anlenkpunkt (9, 10) besitzt, **dadurch gekennzeichnet, dass** der erste Lenker (5) von einer ersten Vorspannvorrichtung (14) elastisch auf den Boden zu vorspannbar ist und der zweite Lenker (6) von einer zweiten Vorspannvorrichtung (15) elastisch in eine vorbestimmte Lenkerlänge und/oder in eine vorbestimmte Anlenkpunktstellung vorspannbar ist.

2. Landwirtschaftliche Bodenbearbeitungsvorrichtung nach dem vorhergehenden Anspruch, wobei die ersten und zweiten Vorspannvorrichtungen (14, 15) unterschiedlich ausgebildet und derart aufeinander abgestimmt sind, dass
- in einem bestimmungsgemäßen Arbeitsbetrieb mit auf das Säschar (2) wirkenden Bodenkräften kleiner als ein vorbestimmter Grenzwert der zweite Lenker (6) längenunveränderbar und/oder dessen verschieblicher Anlenkpunkt (9, 10) unverschiebbar festgehalten ist und der Scharträger (11) unter Überwindung der Vorspannung der ersten Vorspannvorrichtung (14) höhenbewegbar ist, und das
- beim Anfahren des Säschars (2) gegen ein Hindernis wie einen Stein und dergleichen, mit auf das Säschar (2) wirkenden Bodenkräften größer als der genannte oder ein weiterer Grenzwert, der zweite Lenker (6) unter Überwindung der Vorspannung der zweiten Vorspannvorrichtung (15) seine Länge ändert und/oder seinen verschiebbaren Anlenkpunkt (9, 10) verschiebt, so dass der Scharträger (11) unabhängig von einer Bewegung des ersten Lenkers (5) relativ zu dem genannten Lenker (5) verschwenkt.

3. Landwirtschaftliche Bodenbearbeitungsvorrichtung nach einem der vorhergehenden Ansprüche, wobei ein Schwenkbegrenzer (16) oder -anschlag zum Begrenzen der Verschwenkung des Scharträgers (11) gegenüber dem ersten Lenker (5) vorgesehen ist, wobei der zweite Lenker (6) und die zweite Vorspannvorrichtung (15) noch Verstellweg zur Verstellung der Lenkerlänge und/oder des verschiebbaren Anlenkpunkts in entgegengesetzte Richtungen besitzen, wenn der genannte Schwenkbegrenzer (16) die Verschwenkbarkeit des Scharträgers (11) gegenüber dem ersten Lenker (5) blockiert.

4. Landwirtschaftliche Bodenbearbeitungsvorrichtung nach dem vorhergehenden Anspruch, wobei der Schwenkbegrenzer (16) eine Anschlagkontour (17) am ersten Lenker (5) besitzt, gegen die der Scharträger (11) oder der scharträgerseitige Anlenkpunkt (9) des zweiten Lenkers (6) zum Begrenzen des Verschwenkens des Scharträgers (11) gegenüber dem ersten Lenker (5) anfahrbar ist.

5. Landwirtschaftliche Bodenbearbeitungsvorrichtung nach einem der beiden vorhergehenden Ansprüche, wobei die ersten und zweiten Lenker (5, 6) bei blockierter Verschwenkbarkeit des Scharträgers (11) gegenüber dem ersten Lenker (5) eine Einarm-Aufhängung für den Scharträger (11) bilden, bei der der Scharträger (11) zusammen mit dem ersten Lenker (5) um dessen Aufhängungsschwenkachse (13) höhenverschwenkbar ist und dabei dessen Verschwenkung mitmacht, und der zweite Lenker (6) als elastischer Schwenkdämpfer und/oder elastischer Vorspanner für die Schwenkbewegung des ersten Lenkers (5) arbeitet.

6. Landwirtschaftliche Bodenbearbeitungsvorrichtung nach einem der vorhergehenden Ansprüche, wobei die ersten und zweiten Lenker (5, 6) und deren Anlenkpunkte (7, 9) am Scharträger (11) derart angeordnet sind, dass am Scharträger (11) vom Säschar (2) her und/oder von der Tiefenführungsrolle (4) her wirkende Bodenkräfte in vertikaler Richtung einen Hebelarm (H₁ ) bezüglich der genannten Aufhängungsschwenkachse (13) des ersten Lenkers (5) besitzt, der mindestens doppelt so groß oder mehr als dreifach so groß ist wie ein zweiter Hebelarm (H₂ ) der genannten Bodenkräfte in vertikaler Richtung bezüglich des Anlenkpunkts (7) des ersten Lenkers (5) an dem Scharträger (11).

7. Landwirtschaftliche Bodenbearbeitungsvorrichtung nach einem der vorhergehenden Ansprüche, wobei die ersten und zweiten Lenker (5, 6) und deren Anlenkpunkte (7, 9) an dem Scharträger (11) derart angeordnet sind, dass horizontale, auf das Säschar (2) wirkende Bodenkräfte bezüglich des Anlenkpunkts (7) des ersten Lenkers (5) am Scharträger (11) einen Hebelarm (H₃ ) besitzen, der mindestens doppelt so groß ist wie der Hebelarm (H₂ ) vertikaler, auf das Säschar (2) und die Tiefenführungsrolle (4) wirkender Bodenkräfte bezüglich des genannten Anlenkpunkts (7) des ersten Lenkers (5) am Scharträger (11).

8. Landwirtschaftliche Bodenbearbeitungsvorrichtung nach einem der vorhergehenden Ansprüche, wobei die ersten und zweiten Lenker (5, 6) im bestimmungsgemäßen Arbeitsbetrieb eine liegende Ausrichtung einnehmen und Lenkerlängen besitzen, die zumindest näherungsweise gleichlang sind oder voneinander um weniger als 50% oder weniger als 30% der Länge des kürzeren Lenkers abweichen.

9. Landwirtschaftliche Bodenbearbeitungsvorrichtung nach einem der vorhergehenden Ansprüche, wobei die ersten und zweiten Lenker (5, 6) eine Viergelenksaufhängung für den Scharträger (11) bilden, die im bestimmungsgemäßen Arbeitsbetrieb zumindest näherungsweise die Kinematik eines Parallelogramms besitzt und/oder als Parallelogrammlenkerführung ausgebildet ist.

10. Landwirtschaftliche Bodenbearbeitungsvorrichtung nach einem der vorhergehenden Ansprüche, wobei die erste Vorspannvorrichtung (14) Quetschlagerelemente (18) aufweist und/oder aus Quetschlagerelementen (18) besteht, die an der Aufhängungsschwenkachse (13) zwischen dem ersten Lenker (5) und einem Profilträger (19), an dem der genannte erste Lenker (5) um die Aufhängungsschwenkachse (13) schwenkbar angelenkt ist, angeordnet sind, so dass die Quetschlagerelemente (18) bei Verschwenken des ersten Lenkers (5) relativ zum Profilträger (19) um die genannte Aufhängungsschwenkachse (13) eine sich verändernde Quetschung erfahren.

11. Landwirtschaftliche Bodenbearbeitungsvorrichtung nach dem vorhergehenden Anspruch, wobei die Quetschlagerelemente (18) in einer Ausgangs- oder Neutralstellung des ersten Lenkers (5) bereits gequetscht sind oder spielfrei eingepasst sind, wobei der erste Lenker (5) aus der genannten Ausgangs- oder Neutralstellung in gegenläufigen Richtungen unter jeweils zunehmender Quetschung der Quetschlagerelemente (18) auslenkbar ist und von den Quetschlagerelementen (18) aus beiden Auslenkungsrichtungen elastisch zurück zur Ausgangs- oder Neutralstellung getrieben wird.

12. Landwirtschaftliche Bodenbearbeitungsvorrichtung nach einem der vorhergehenden Ansprüche, wobei die zweite Vorspannvorrichtung (15) einen Druckmittelzylinder (36) umfasst, der von einem Druckspeicher her und/oder von einer Schlepperdruckquelle her mit einem Vorspanndruck beaufschlagbar ist, wobei eine Einstellvorrichtung zum variablen Einstellen des Vorspanndrucks des Druckspeichers und/oder der Schlepperdruckwelle vorgesehen ist.

13. Landwirtschaftliche Bodenbearbeitungsvorrichtung nach einem der vorhergehenden Ansprüche, wobei die zweite Vorspannvorrichtung (15) ein Teleskopfederbein aufweist, das den genannten zweiten Lenker (6) bildet und eine mechanische Vorspannfeder und/oder eine Vorspann-Druckmittelkammer umfasst.

14. Landwirtschaftliche Bodenbearbeitungsvorrichtung nach einem der vorhergehenden Ansprüche, wobei die Säschar (2) einen Scharmeißel aufweist, der im bestimmungsgemäßen Arbeitsbetrieb einen zur Vertikalen positiven Schneidkantenwinkel (21) und beim Anfahren des Säschar (2) gegen ein Hindernis unter Verschwenken des Sähscharträgers (11) gegenüber dem ersten Lenker (5) unter Überwindung der Vorspannkraft der zweiten Vorspannvorrichtung (15) einen zur vertikalen negativen Schneidkantenwinkel (21) besitzt.

15. Landwirtschaftliche Bodenbearbeitungsvorrichtung nach einem der vorhergehenden Ansprüche, wobei das Säschar (2) und die Tiefenführungsrolle (4) gemeinsam an dem Scharträger (11) befestigt sind, so dass die Tiefenführungsrolle (4) beim Anfahren des Säschars (2) gegen ein Hindernis unter Überwindung der Vorspannung der zweiten Vorspannvorrichtung (15) bei Längenänderungen und/oder Verschiebungen des Anlenkpunkts (9, 10) des zweiten Lenkers (6) nach oben schwenkt, während das Säschar (2) nach hinten schwenkt.
